# EUROPEAN PATENT APPLICATION

(11) **EP 1 955 629 A2**
(43) Date of publication of application: **13.08.2008**
(21) Application number: 07006668.3
(22) Date of filing: 30.03.2007
(51) Int. Cl.: A47J 45/07, A47J 36/04

(54) **Removable wooden handle for pots**

(30) Priority: 07.02.2007 IT MC20070023
(71) Applicant: PRESSOFONDERIA F. LLI LUCHETTI S.R.L., 60027 Osimo AN (IT)
(72) Inventor: Luchetti, Roberto, 60027 Osimo (AN) (IT)
(74) Representative: Baldi, Claudio

(57) **Abstract**

The present invention relates to a removable handle for pots composed of a tubular wooden body (1) with elongated shape, provided with a longitudinal central groove (1a) in which a bolt (2) is inserted to actuate a clamp (A) supported at the front end (1 a) of the handle, whose mobile jaw (4) can be brought closer or farther with respect to the fixed jaw (3), driving into rotation the tubular body (1) joined to the bolt (2).

## Description

The present patent application for industrial invention relates to a removable wooden handle for pots, characterised by easy mounting and dismounting, also when the wood has suffered dilatation caused by humidity.

The handle of the invention is composed of a wooden body ending with a clamp mechanism that allows to fit and tighten it to a pot provided with a suitable appendix that incorporates a fitting and tightening flange.

The removable handle of the invention has been devised as a remedy to the inconveniences suffered by the handles of the same kind that are currently available on the market.

The first inconvenience refers to the difficulties encountered in dismounting the handle from the pot, after the pot is washed in hot water in a dishwasher.

To better understand the reasons that make it difficult to dismount the wet handle, reference must be made to the structural configuration of the removable wooden handles for pans that are currently available on the market.

More precisely, the said handles comprise a tubular body and a clamp device situated at the front hand of the said body and actuated by means of a long bolt inserted through the tubular body.

More precisely, the clamp device comprises a pair of jaws designed to tighten the flange of a suitably shaped appendix that externally protrudes on the pan edge.

More precisely, the first jaw, that is to say the jaw in the proximity of the tubular wooden handle, is fixed, while the second jaw, in opposite position to the first one, is mobile and can be brought closer or farther with respect to the first jaw by translating along a direction that coincides with the longitudinal axis of the handle.

The head of the bolt is engaged externally on the rear section of the tubular body, with the threaded end section of the bolt that protrudes from the front end of the tubular body, being inserted through the fixed jaw and engaged into a threaded hole of the mobile jaw.

By turning the head of the bolt, the user can tighten or loosen the bolt with respect to the mobile jaw that is consequently brought closer or farther with respect to the fixed jaw.

In order to make it easier to grab and drive into rotation the head of the bolt, the said head is usually engaged and hidden inside a manoeuvring knob that, for aesthetical reasons, is generally made of wood and is an extension of the tubular body of the handle.

In order to fit and tighten the handle to a pot, the user simply needs to grab the tubular body with one hand, insert the anchoring flange provided on the pot inside the pair of jaws and then rotate the knob with the other hand to tighten the flange firmly with the said clamp device.

In this tightening position, the knob adheres against the rear section of the tubular wooden body with a pressure proportional to the tightening force of the flange of the pot.

When the pot is washed with the handle, the tubular wooden body tends to swell and expand, thus consequently increasing the friction between the rear section and the opposite side of the manoeuvring knob.

The adherence created by friction between the tubular wooden body and the manoeuvring knob is higher if the knob is made of wood and is subject to axial dilatation.

In such a case, it is very difficult, if not impossible, to rotate the manoeuvring knob to loosen the grip of the clamp device and dismount the handle from the pot.

The purpose of the present invention is to devise a new removable handle for pots with wooden body that is free from the said inconveniences related to the expansion and dilatation of the wood.

A further purpose of the invention is to provide a removable handle that is obtained with a lower number of components with respect to the ones that are used today to provide removable handles for pans of the same type.

These and other purposes have been achieved by the handle of the invention, whose main characteristics are illustrated in the first claim.

The removable handle of the invention is traditionally provided with a clamp device, formed of two jaws prismatically joined one to another; the first jaw is fixed and supported with possibility of rotation at the front end of the wooden body, while the second jaw is mobile and situated before the first one, being actuated by a bolt, as in the removable handles of known type illustrated above.

The peculiarity of the handle of the invention consists in the fact that the head of the bolt is engaged and hidden in a suitable seat obtained in the centre of the rear section of the tubular body, where the head of the bolt is inserted axially, without possibility to rotate.

In view of the above, in case of dilatation of the tubular wooden body, the head of the bolt will adhere with higher pressure on the bottom of its housing. However, such a condition will not impair the dismounting of the handle of the invention, in which the clamp device is loosened by driving into rotation the tubular body with one hand and holding the pot with the other hand.

Since the tubular body offers a large grip surface, the user can exercise a strong torsional moment that is indirectly transmitted to the head of the bolt engaged inside the handle.

In view of the aforementioned description of the handle of the invention, it appears evident that the said handle is composed of a lower number of constructive elements compared to the known models of the same type with manoeuvring knob, which is not provided in the handle of the invention.

For clarity purposes, the description of the removable handle of the invention continues with reference to the enclosed drawings, which only have an illustrative, not limiting purpose, whereby:

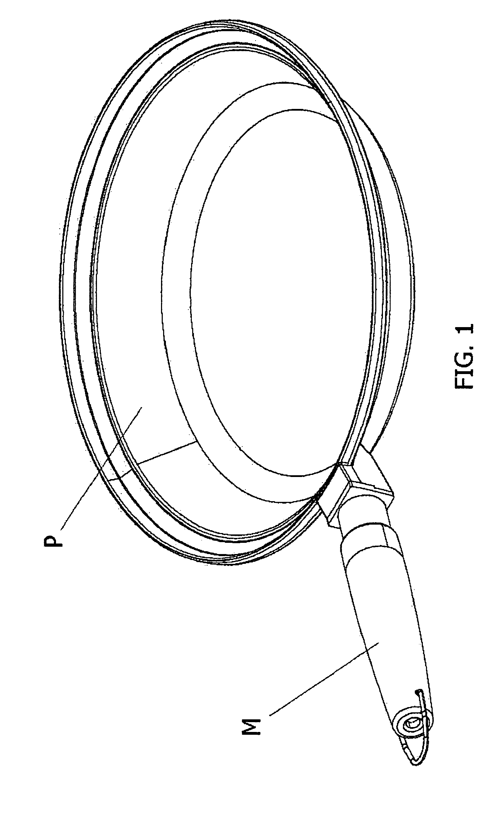

- figure 1 is an axonometric view of the handle of the invention fitted onto a pan;
- figure 2 is the same as figure 1, except for the fact that the handle is dismounted from the pan;
- figure 3 is a view of the handle and the pan shown in figure 1, sectioned along a vertical plane passing through the longitudinal axis of the handle;
- figure 3A is an enlarged view of figure 3 that shows the way in which the handle of the invention is fitted to the pan;
- figure 4 is a top view of the handle of the invention;
- figure 5 is a section of the handle of figure 4 with the longitudinal plane V-V of figure 4.

The removable handle of the invention is composed of a tubular wooden body (1) with elongated shape, provided with a longitudinal central groove (1 a) in which a bolt (2) is inserted.

The end section (2a) of the threaded stem (2b) of the bolt (2) shortly protrudes from the front end (1 b) of the tubular body (1), that is to say from the end designed to face the pot (P) on which the handle (M) is fitted.

The groove (1 a) ends at the rear end (1 c) of the tubular body (1) with an enlarged seat (1d) having a polygonal shape and exactly the same dimensions as the head (2c) of the bolt (2), which is preferably forced into the seat (1 d) in such a way that the bolt (2) is joined to the tubular body (1) with possibility of rotation.

The front end (1b) of the handle (M) is provided with a clamp (A) that comprises a pair of jaws (3 and 4) prismatically joined one to another, in such a way that they are free to slide closer or farther, without possibility of rotation.

The first jaw (3) is fixed and fitted at the front end (1 b) of the tubular body (1) with possibility of rotation, while the second jaw (4) is mobile and opposite to the first one (3).

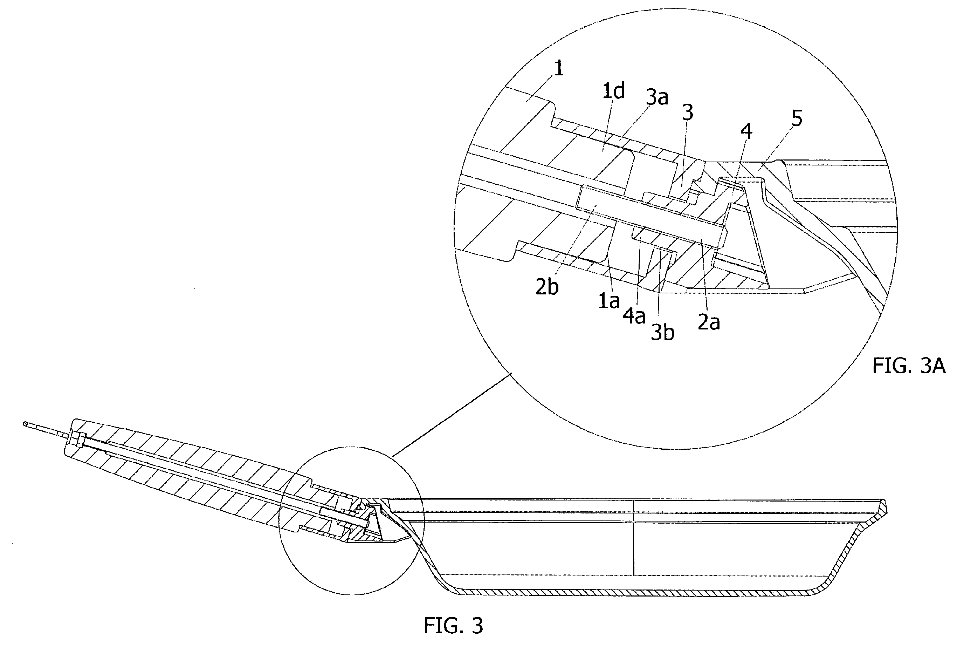

With special reference to figure 3, the tubular body (1) ends with a circular point (1d), in which a connection collar (3a) obtained on the back of the first jaw (3) is exactly inserted, with possibility of rotation.

The first jaw (3) is provided with a quadrangular slot (3b) in which the threaded stem (2b) of the bolt (2) is inserted with clearance.

The second jaw (4) is provided with an insertion piece (4a) facing the first jaw (3) and provided with an internally threaded hole (4b), in such a way as to engage with the end section (2a) of the threaded stem (2b) of the bolt (2).

The insertion piece (4a) has a quadrangular section that corresponds to the section of the slot (3b), with which the piece (4a) is prismatically coupled.

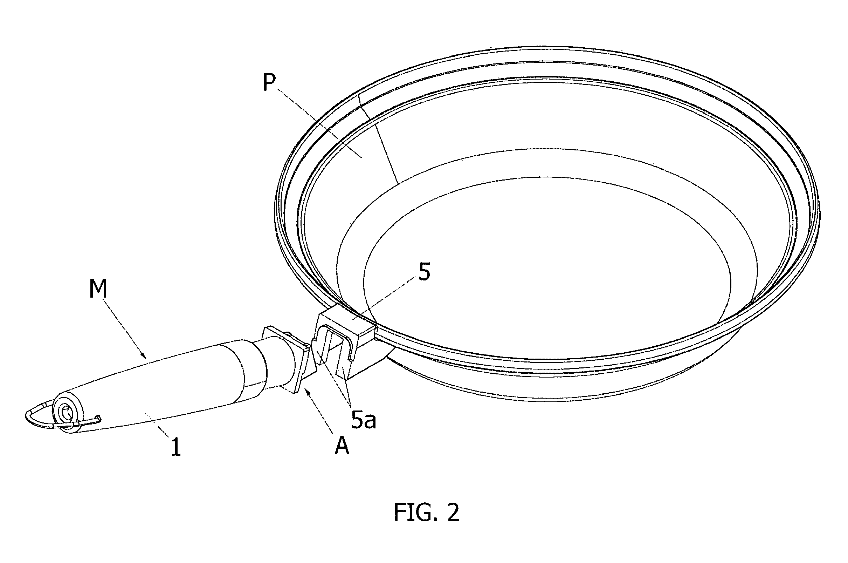

With special reference to figure 2, the handle (M) of the invention can only be fitted to a special type of pans (P), of known type, characterised in that a fixing bracket (4) is provided externally on the edge of the pan, having a box-shaped structure and a transversal section with overturned-U shape, ending with an internal flange (5a) with suitable shape and dimensions to be inserted and tightened inside the two jaws (3 and 4).

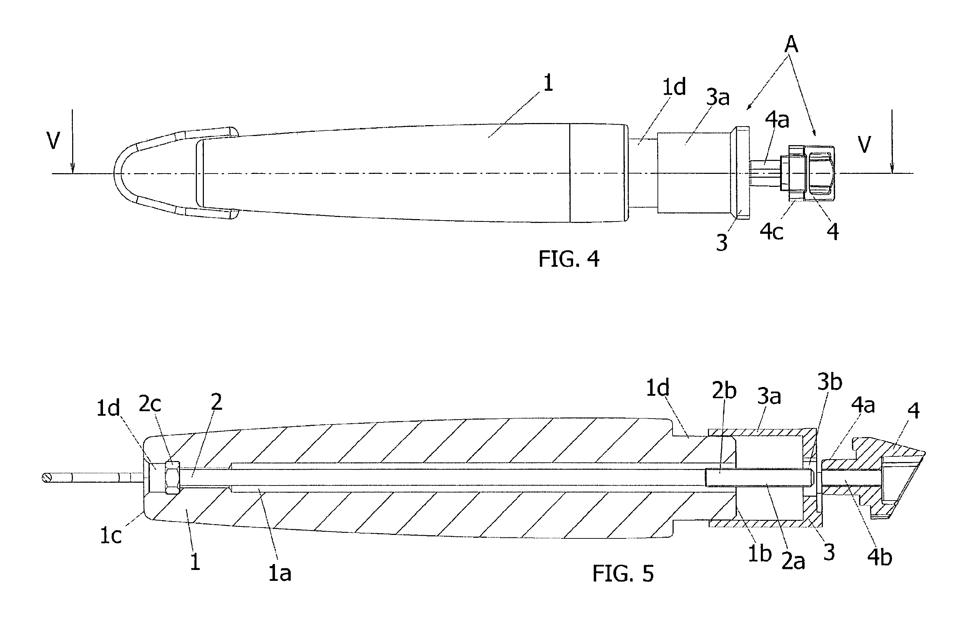

With special reference to figure 4, the external jaw (4) has an external rectangular section (4c) designed to be exactly inserted, from below upwards, inside the fixing bracket (5) that embraces the jaw (4) on three sides, thus preventing it from rotating around the threaded stem (2) of the bolt (2) tightened inside the hole (4b) of the insertion piece (4a).

This type of coupling between the external section (4c) of the jaw (4) and the internal section of the fixing bracket (5) is of fundamental importance, since the first jaw (3) must be brought closer to the second jaw (4) by simply rotating the tubular body (1) in such a way that the threaded stem (2b) of the bolt (2) is tightened inside the hole (4b) of the insertion piece (4a).

If the mobile jaw (4) rotated inside the fixing bracket (5), the rotation of the body (1) would cause the rotation of the mobile jaw (4), thus causing the ineffectiveness of the clamp (A).

## Claims

1. Removable wooden handle for pots, of the type comprising a tubular wooden body (1) with elongated shape, provided with a longitudinal central groove (1 a) in which a bolt (2) is inserted to actuate the mobile jaw of a clamp (A) supported at the front end (1 a) of the handle, and formed of a first fixed jaw (3) and a second mobile jaw (4) prismatically coupled one to another, handle (M) being **characterised in that** the said groove (1 a) ends at the rear end (1 c) of the tubular body (1) with an enlarged seat (1 d) having a polygonal shape and exactly the same dimensions as the head (2c) of the bolt (2), whose threaded stem (2b) is engaged into a threaded hole (4b) obtained on the mobile jaw (4) and the fixed jaw (3) is fitted with possibility of rotation to the front end (1 a) of the tubular body (1).

2. Handle as claimed in above claim, **characterised in that** the first jaw (3) has a quadrangular slot (3b) in which the threaded stem (2b) of the bolt (2) is inserted with clearance, while the second jaw (4) has an insertion piece (4a) facing the first jaw (3) and provided with an internally threaded hole (4b), in such a way as to engage with the end section (2a) of the threaded stem (2b) of the bolt (2).

3. Handle as claimed in above claims, **characterised in that** the insertion piece (4a) has a quadrangular section that corresponds to the section of the slot (3b), with which the piece (4a) is prismatically coupled.

4. Handle as claimed in one or more of the above claims, **characterised in that** the tubular body (1) ends with a circular point (1d), in which a connection collar (3a) obtained on the back of the first jaw (3) is exactly inserted, with possibility of rotation.
